# EUROPEAN PATENT APPLICATION

(11) **EP 4 530 003 A1**
(43) Date of publication of application: **02.04.2025**
(21) Application number: 24203281.1
(22) Date of filing: 27.09.2024
(51) Int. Cl.: B22F 10/28, B33Y 10/00, B33Y 70/00, C22C 1/051, C22C 29/06, C22C 29/10

(54) **POWDER MATERIAL FOR ADDITIVE MANUFACTURING AND METHOD FOR MANUFACTURING ADDITIVE-MANUFACTURED PRODUCT USING POWDER MATERIAL**

(30) Priority: 29.09.2023 JP 2023170499
(71) Applicant: Fujimi Incorporated, Kiyosu-shi, Aichi 452-8502 (JP)
(72) Inventor: YAMADA, Junya, Kiyosu-shi, Aichi 452-8502 (JP); IBE, Hiroyuki, Kiyosu-shi, Aichi 452-8502 (JP); KATO, Yuta, Kiyosu-shi, Aichi 452-8502 (JP); WATANABE, Shinya, Kiyosu-shi, Aichi 452-8502 (JP)
(74) Representative: Maiwald GmbH

(57) **Abstract**

An object of the present invention is to provide a powder material for additive manufacturing capable of forming an additive-manufactured product having more excellent mechanical strength.

The present invention provides a powder material for additive manufacturing containing a carbide ceramic and a metal, in which a content of the metal is 8 to 43 volume% with respect to a total amount of the carbide ceramic and the metal, and in an XRD spectrum of an additive manufactured product obtained by additive manufacturing including laser light irradiation, peaks other than those derived from the powder material before the laser light irradiation are not included; or a solid solubility of the carbide ceramic in the metal at 1250°C is 8 mass% or less.

## Description

### TECHNICAL FIELD

The present invention relates to a powder material for additive manufacturing. The present invention also relates to a method for manufacturing an additive-manufactured product using the powder material.

### BACKGROUND

The so-called three-dimensional manufacturing techniques for preparing an additive-manufactured product to be manufactured based on three-dimensional shape data thereof (for example, three-dimensional CAD data) is widely used. One of such manufacturing techniques is an additive manufacturing method in which a powder material is laid in thin layers and then bonded or sintered into a shape corresponding to a cross section of the additive-manufactured product to be manufactured, and the thin layers are sequentially and integrally stacked. Conventionally, a resin material has been frequently used as a powder shaping material used for such additive manufacturing, but in recent years, a powder material for additive manufacturing containing metals or ceramics that can be used for additive manufacturing such as a powder bed fusion (PBF) method or a laser metal deposition (LMD) method has been developed (refer to WO 2015/194678 A, JP 2017-113952 A, JP 2017-114716 A, and JP 2017-115194 A).

### SUMMARY

Incidentally, as one of the development goals for powder materials for additive manufacturing containing inorganic materials such as metals or ceramics, development of a powder material capable of obtaining an additive-manufactured product having high mechanical strength without cracks or chips can be mentioned. As a material suitable for this goal, a powder material containing tungsten carbide (WC) and cobalt (Co) as main components has been developed. Tungsten carbide and cobalt are raw materials of a cemented carbide (WC-Co alloy), and are suitable as materials for manufacturing an additive-manufactured product having high hardness by additive manufacturing. However, the powder material developed so far still has room for improvement in order to further improve the mechanical strength of the additive-manufactured product.

In view of such circumstances, an object of the present invention is to provide a powder material for additive manufacturing capable of forming an additive-manufactured product having more excellent mechanical strength.

In order to achieve the above object, the present inventors have studied in detail an alloy structure of an additive-manufactured product made of powder materials containing a carbide ceramic and a metal as main components. As a result, the present inventors have found that the mechanical strength of an additive-manufactured product can be improved by employing an alloy composition capable of suppressing formation of a brittle phase in the additive-manufactured product, and have completed the present invention.

That is, the present invention provides a powder material for additive manufacturing containing a carbide ceramic and a metal, in which a content of the metal is 8 to 43 volume% with respect to a total amount of the carbide ceramic and the metal, and in an XRD spectrum of an additive-manufactured product obtained by additive manufacturing including laser light irradiation, peaks other than those derived from the powder material before the laser light irradiation are not included.

Further, the present invention provides a powder material for additive manufacturing containing a carbide ceramic and a metal, in which a content of the metal is 8 to 43 volume% with respect to a total amount of the carbide ceramic and the metal, and a solid solubility of the carbide ceramic in the metal at 1250°C is 8 mass% or less.

### BRIEF DESCRIPTION OF THE DRAWINGS

FIG. 1 is a simplified diagram of an additive manufacturing apparatus;
FIGS. 2-1A to 2-1E are XRD spectra of powder materials prepared in Examples 1 to 5 and additive-manufactured products after laser light irradiation (specifically, after additive manufacturing including laser light irradiation) prepared using the powder materials;
FIGS. 2-2F to 2-2H are XRD spectra of powder materials prepared in Comparative Examples 1 to 3 and additive-manufactured products after laser light irradiation (specifically, after additive manufacturing including laser light irradiation) prepared using the powder materials; and
FIGS. 3A and 3B are SEM photographs showing cross sections of an additive-manufactured product prepared using the powder materials according to Example 1 and Comparative Example 3 and sintered bodies thereof.

### DETAILED DESCRIPTION

According to an aspect of the present invention, there is provided a powder material for additive manufacturing containing a carbide ceramic and a metal, in which a content of the metal is 8 to 43 volume% with respect to a total amount of the carbide ceramic and the metal, and in an XRD spectrum of an additive-manufactured product obtained by additive manufacturing including laser light irradiation, peaks other than those derived from the powder material before the laser light irradiation are not included.

According to another aspect of the present invention, there is provided a powder material for additive manufacturing containing a carbide ceramic and a metal, in which a content of the metal is 8 to 43 volume% with respect to a total amount of the carbide ceramic and the metal, and a solid solubility of the carbide ceramic in the metal at 1250°C is 8 mass% or less.

That is, the present invention provides a powder material for additive manufacturing containing a carbide ceramic and a metal, in which a content of the metal is 8 to 43 volume% with respect to a total amount of the carbide ceramic and the metal; and at least one of the following (1) or (2) is satisfied;
(1) in an XRD spectrum of an additive-manufactured product obtained by additive manufacturing including laser light irradiation, peaks other than those derived from the powder material before the laser light irradiation are not included; or
(2) a solid solubility of the carbide ceramic in the metal at 1250°C is 8 mass% or less.

According to the present invention, there is provided a powder material for additive manufacturing capable of forming an additive-manufactured product having more excellent mechanical strength.

Studies by the present inventors have revealed that when powder additive manufacturing such as a powder bed fusion (PBF) method or a laser metal deposition (LMD) method is performed using a powder material containing tungsten carbide (WC) and cobalt (Co) as main components, which are widely used as a powder material for additive manufacturing, WC decomposition or a reaction between WC and Co occurs due to an influence of melting and rapid cooling and solidification of WC and Co by irradiation energy of laser light or electron beam during the shaping, and a decomposition product such as free carbon or a reaction product of WC and Co is generated. As a result, it was found that the η phase, which is a brittle layer, can be easily generated in the structure of the additive-manufactured product. The present inventors have found that the mechanical strength of the additive-manufactured product will decrease when a brittle phase such as the η phase is present at a high presence ratio in the additive-manufactured product. On the other hand, in the powder material for additive manufacturing of one aspect of the present invention, the carbide ceramic and the metal are contained in a predetermined ratio, and peaks other than those derived from the powder material before laser light irradiation are not included in the XRD spectrum of the additive-manufactured product. That is, there is no peak derived from the brittle phase generated by generation of a reaction product or the like by laser irradiation energy. Therefore, the mechanical strength of the additive-manufactured product obtained by the additive manufacturing using the powder material can be improved. In the powder material for additive manufacturing of another aspect of the present invention, the carbide ceramic and the metal are contained in a predetermined ratio, and the solid solubility of the carbide ceramic in the metal is in a predetermined range. As a result, the carbide ceramic and the metal are less likely to come into contact with each other at the time of additive manufacturing, and thus these reactions are suppressed, a reaction product is less likely to be generated, and a brittle phase is less likely to be generated. As a result, the mechanical strength of the additive-manufactured product obtained by the additive manufacturing using the powder material can be improved.

Furthermore, it has been found that when powder additive manufacturing is performed using a powder material containing tungsten carbide (WC) and cobalt (Co) as main components, which are widely used as a powder material for additive manufacturing, a reaction product of WC and Co (for example, Co₃W₃C) is generated as described above, and such a reaction product also causes a decrease in the mechanical strength of the additive-manufactured product. In order to increase the mechanical strength of the additive-manufactured product, an attempt was made to further apply heat treatment to the additive-manufactured product to return the reaction product to WC and Co, but WC grain growth occurred during the heat treatment, and the effect of improving the mechanical strength was limited. On the other hand, in the powder material of the present aspect, since the brittle phase is less likely to be generated in the additive-manufactured product, excellent mechanical strength can be obtained even when no further heat treatment is applied after additive manufacturing. Furthermore, since the generation of the reaction product is suppressed, grain growth hardly occurs even when further heat treatment is applied to the additive-manufactured product, and the mechanical strength of the additive-manufactured product can be further improved.

In the powder material for additive manufacturing according to the present aspect, in an XRD spectrum of an additive-manufactured product obtained by additive manufacturing including laser light irradiation using the powder material for additive manufacturing, peaks other than those derived from the powder material before the laser light irradiation are not included.

In one embodiment, in the powder material for additive manufacturing, peaks other than those derived from the powder material before laser light irradiation are not included in the XRD spectrum of the additive-manufactured product which is obtained by additive manufacturing including laser light irradiation using the powder material for additive manufacturing, and is not subjected to further heat treatment. In one embodiment, in the powder material for additive manufacturing, peaks other than those derived from the powder material before laser light irradiation are not included in the XRD spectrum of the additive-manufactured product (sintered body) after being subjected to further heat treatment on the additive-manufactured product obtained by additive manufacturing including laser light irradiation using the powder material for additive manufacturing.

Preferably, in the powder material for additive manufacturing according to the present aspect, peaks other than those derived from the powder material before laser light irradiation are not included in the XRD spectrum of the additive-manufactured product obtained by additive manufacturing including laser light irradiation, and is not subjected to further heat treatment. When further heat treatment is performed, more preferably, peaks other than those derived from the powder material before laser light irradiation are not included in the XRD spectra of both the additive-manufactured product which is not subjected to heat treatment and the additive-manufactured product (sintered body) which is subjected to heat treatment.

Preferably, the powder material for additive manufacturing according to the present aspect is a powder material for additive manufacturing containing a carbide ceramic and a metal, in which a content of the metal is 8 to 43 volume% with respect to a total amount of the carbide ceramic and the metal; in an XRD spectrum of the additive-manufactured product obtained by additive manufacturing including laser light irradiation, peaks other than those derived from the powder material before the laser light irradiation are not included; and the solid solubility of the carbide ceramic in the metal at 1250°C is 8 mass% or less. With this configuration, the effect of the present invention can be more remarkably obtained.

Hereinafter, preferred embodiments of the present invention will be described. Note that matters other than those particularly mentioned in the present specification and necessary for the implementation of the present invention can be ascertained as design matters by those skilled in the art based on the related art in the relevant field. The present invention can be implemented based on the contents disclosed in the present specification and technical common knowledge in the art. In the specification, the notation "X to Y" indicating a numerical range means "X or more and Y or less" unless otherwise noted.

### <Definitions>

In the present specification, the "powder material" refers to a powdered material used for additive manufacturing. The powder material disclosed herein is a carbide ceramic/metal-containing powder material, that is, a powder material for additive manufacturing in which the carbide ceramic and the metal are the main constituent components (that is, the powder material for additive manufacturing in which the largest constituent components in the entire powder material on a mass basis are carbide ceramic + metal). For example, in the powder material for additive manufacturing of the present aspect, more than 50 mass% of the entire powder material on a mass basis is composed of the carbide ceramic and the metal.

In the present specification, the "primary particle" means the smallest unit that can be identified as a granular material from its external appearance among the morphological constituent components that constitute the powder material. Therefore, when the carbide ceramic/metal-containing powder material disclosed herein contains secondary particles (for example, granulated particles), the particles constituting the secondary particles may be referred to as primary particles. Here, the "secondary particle" refers to a particulate matter (in the form of a particle) in which primary particles are three-dimensionally bonded and act integrally as one particle. The particles which are granulated and the granulated sintered particles which are sintered after granulation are typical examples of the "secondary particles" referred to herein.

The term "bond" as used herein means that two or more primary particles are directly or indirectly bound to each other, and examples thereof include a bond between primary particles by a chemical reaction, a bond between primary particles attracted to each other by simple adsorption, a bond using an anchor effect of causing an adhesive or the like to enter irregularities on a surface of a primary particle, a bond between primary particles utilizing an effect of attracting to each other by static electricity, a bond in which surfaces of primary particles are melted and integrated, and the like.

In addition, in the present specification, the term "raw material particles" refers to particles constituting the powder at the raw material stage (raw material powder) used to form the powder material disclosed herein.

In the present specification, unless otherwise specified, "average particle size" concerning a powder material means an average particle size (50% volume average particle size, D₅₀) at an integrated value of 50% in a volume-based particle size distribution measured by a particle size distribution measuring device based on a laser scattering/diffraction method.

### <Configuration of Powder Material>

As described above, the powder material disclosed herein is a carbide ceramic/metal-containing powder material containing a carbide ceramic and a metal.

### (Carbide Ceramic)

The carbide ceramic is not particularly limited as long as an additive-manufactured product obtained by additive manufacturing including laser light irradiation using a powder material for additive manufacturing containing the carbide ceramic exhibits a predetermined XRD spectrum, or the solid solubility of the carbide ceramic in the metal described later has a predetermined value. The carbide ceramic is not particularly limited, and examples thereof include vanadium carbide (VC), niobium carbide (NbC), tantalum carbide (TaC), titanium carbide (TiC), zirconium carbide (ZrC), hafnium carbide (HfC), silicon carbide (SiC), boron carbide (B₄C), and the like. The carbide ceramic may be a composite carbide containing two or more kinds of metals. Any one of the carbide ceramic may be contained alone, or two or more thereof may be contained in combination.

In a preferred embodiment, the carbide ceramic has a standard enthalpy of formation of -90 kJ/mol or less. With this configuration, a reaction between the carbide ceramic and the metal is less likely to occur in a rapid cooling solidification process including melting both the carbide ceramic and the metal, such as additive manufacturing. Therefore, it is possible to avoid the reaction product between the carbide ceramic and the metal from causing a decrease in the performance of the additive-manufactured product. The standard enthalpy of formation of the carbide ceramic is more preferably -95 kJ/mol or less, and still more preferably -100 kJ/mol or less. The lower limit value of the standard enthalpy of formation of the carbide ceramic is not particularly limited, but is, for example, - 250 kJ/mol or more. Examples of the carbide ceramic having a standard enthalpy of formation of -90 kJ/mol or less include TiC (-185 kJ/mol), VC (-102 kJ/mol), ZrC (-203 kJ/mol), NbC (-139 kJ/mol), TaC (-146 kJ/mol), and the like. When two or more kinds of carbide ceramics are used in combination, the standard enthalpy of formation of at least one kind of carbide ceramic is preferably in the above range, and the standard enthalpies of formation of all the carbide ceramics are more preferably in the above range.

As the value of the standard enthalpy of formation of carbide ceramic, a value described in Kagaku Binran, Kiso Hen, 5th edition, edited by The Chemical Society of Japan, Maruzen Publishing Co., Ltd. (February 2004) can be used.

In a preferred embodiment, the carbide ceramic has a melting point of 2700°C or higher. With this configuration, a reaction between the carbide ceramic and the metal is less likely to occur in a rapid cooling solidification process including melting both the carbide ceramic and the metal, such as additive manufacturing. Therefore, it is possible to avoid the reaction product between the carbide ceramic and the metal from causing a decrease in the performance of the additive-manufactured product. The melting point of the carbide ceramic is more preferably 2750°C or higher, and still more preferably 2800°C or higher. The upper limit value of the melting point of the carbide ceramic is not particularly limited, but is, for example, 4000°C or lower, preferably 3950°C or lower, and more preferably 3900°C or lower. Within the above range, the additive-manufactured product can be more efficiently manufactured by the additive manufacturing. Examples of the carbide ceramic having a melting point of 2700°C or higher include TiC (3250°C), VC (2830°C), ZrC (3180°C), NbC (3500°C), HfC (3900°C), TaC (3880°C), and the like. When two or more kinds of carbide ceramics are used in combination, the melting point of at least one kind of carbide ceramic is preferably in the above range, and the melting points of all the carbide ceramics are more preferably in the above range.

As the value of the melting point of the carbide ceramic, a value described in Superhard Alloys and Sintered Hard Materials: Fundamentals and Applications, edited by Hisashi Suzuki, Maruzen Publishing Co., Ltd. (February 1986) can be used.

In a preferred embodiment, the carbide ceramic contains one or more compounds selected from the group consisting of a carbide of a Group 4 element and a carbide of a Group 5 element. In a preferred embodiment, the carbide ceramic is one or more compounds selected from the group consisting of a carbide of a Group 4 element and a carbide of a Group 5 element. Examples of the Group 4 element include Ti, Zr, Hf, and the like, and examples of the carbide of the Group 4 element include TiC, ZrC, HfC, and the like. Examples of the Group 5 element include V, Nb, Ta, and the like, and examples of the carbide of the Group 5 element include VC, NbC, TaC, and the like. By using one or more compounds selected from the group consisting of the carbide of the Group 4 element and the carbide of the Group 5 element as the carbide ceramic, the additive-manufactured product having higher hardness can be obtained.

In the powder material for additive manufacturing of the present aspect, a ratio of a total amount of the carbide of the Group 4 element and the carbide of the Group 5 element to a total amount of the carbide ceramic is, for example, 40 mass% or more, preferably 50 mass% or more, more preferably more than 50 mass%, still more preferably 55 mass% or more, still more preferably 60 mass% or more, still more preferably 65 mass% or more, still more preferably 70 mass% or more, still more preferably 75 mass% or more, still more preferably 80 mass% or more, still more preferably 85 mass% or more, still more preferably 90 mass% or more, still more preferably 95 mass% or more, still more preferably 97 mass% or more, still more preferably 99 mass% or more, and still more preferably 100 mass%. In one embodiment, the carbide ceramic consists only of one or more compounds selected from the group consisting of the carbide of the Group 4 element and the carbides of the Group 5 element.

As the carbide ceramic powder made of raw material particles of the carbide ceramic, which can serve as the raw material of the powder material of the present aspect, various commercially available carbide ceramic powder materials for cemented carbide formation are used. For example, raw material particles of carbide ceramic having an average particle size (D₅₀) of 0.05 to 10 um, preferably 0.1 to 8 µm, and more preferably 0.2 to 5 um can be used. By adopting such a carbide ceramic powder made of raw material particles of carbide ceramic, a denser additive-manufactured product can be manufactured.

### (Metal)

The metal is not particularly limited as long as the additive-manufactured product using the metal exhibits a predetermined XRD spectrum or the solid solubility of carbide ceramic has a predetermined value. Examples of the metal include magnesium (Mg), aluminum (Al), titanium (Ti), chromium (Cr), manganese (Mn), iron (Fe), cobalt (Co), nickel (Ni), copper (Cu), zinc (Zn), zirconium (Zr), gold (Au), silver (Ag), platinum (Pt), iridium (Ir), bismuth (Bi), niobium (Ni), molybdenum (Mo), tin (Sn), tungsten (W), lead (Pb), alloys thereof, and the like. These metals may be contained alone, or two or more thereof may be contained in combination. Among these, from the viewpoint of obtaining an additive-manufactured product having higher strength, the metal is preferably one or more selected from the group consisting of Co, Ni, and Fe, and more preferably Co or Ni. That is, in a preferred embodiment, the metal contains one or more selected from the group consisting of cobalt, nickel, and iron. In a preferred embodiment, the metal is one or more selected from the group consisting of cobalt, nickel, and iron.

In the powder material according to the present aspect, the XRD spectrum of an additive-manufactured product obtained by additive manufacturing including laser light irradiation using the powder material does not include peaks other than those derived from the powder material before the laser light irradiation, or the solid solubility of the carbide ceramic in the metal at 1250°C is 8 mass% or less. Here, the solid solubility value is a value of a percentage of a mass of the carbide ceramic that can be solid-solved in a unit mass of the metal.

The means for obtaining the powder material in which the additive-manufactured product exhibits a predetermined XRD spectrum is not particularly limited, but can be achieved, for example, by selecting the carbide ceramic and the metal such that the solid solubility of the carbide ceramic in the metal at 1250°C is 8 mass% or less. As a result, the reaction between the carbide ceramic and the metal is less likely to occur during the additive manufacturing, and thus peaks other than the peaks derived from the raw material of the powder material are less likely to appear in the XRD spectrum of the additive-manufactured product.

When the solid solubility of the carbide ceramic in the metal at 1250°C exceeds 8 mass%, the reaction product between the carbide ceramic and the metal is generated in additive manufacturing, and thus the performance of the additive-manufactured product may deteriorate. The solid solubility of the carbide ceramic in the metal at 1250°C is preferably 7 mass% or less, more preferably less than 7 mass%, and still more preferably 6 mass% or less. The lower limit value of the solid solubility of the carbide ceramic in the metal at 1250°C is not particularly limited, but is, for example, 0.1 mass% or more, preferably 0.5 mass% or more, and more preferably 1 mass% or more. Examples of such combinations of the carbide ceramic and the metal include TiC/Co (1 mass%), TiC/Ni (5 mass%), TiC/Fe (0.5 mass%), VC/Co (6 mass%), VC/Ni (7 mass%), VC/Fe (3 mass%), NbC/Co (5 mass%), NbC/Ni (3 mass%), NbC/Fe (1 mass%), TaC/Co (3 mass%), TaC/Ni (5 mass%), TaC/Fe (0.5 mass%), and the like. Here, as the solid solubility of the carbide ceramic in the metal, a solid solubility value of a single carbide ceramic (however, materials that share common constituent elements, such as VC and V₄C₃, are considered to be a single carbide ceramic) in a single metal is used.

Here, as the solid solubility value of the carbide ceramic in the metal at 1250°C, the value described in F. W. Glaser: Met. Progr., 67 (1955) 77-82 is used. Note that compounds that share common constituent elements, such as VC and V₄C₃, can be considered to have the same solid solubility value.

When two or more kinds of carbide ceramics are used in combination and/or two or more kinds of metals are used in combination, the component constituting more than 50 mass% of the total carbide ceramics may have a solid solubility value at 1250°C of 8 mass% or less with respect to the component constituting more than 50 mass% of the total metals. When the mass ratio of the carbide ceramic having the highest mass ratio is 50 mass% or less of the total carbide ceramics, all carbide ceramics may have the above-described solid solubility values. Similarly, when the mass ratio of the metal having the highest mass ratio is 50 mass% or less of the total metals, all metals may have the above-described solid solubility value. When the mass ratio of carbide ceramic having the highest mass ratio is 50 mass% or less and the mass ratio of the metal having the highest mass ratio is 50 mass% or less, all combinations of all the carbide ceramics and all the metals may have the above-described solid solubility value.

More preferably, in all combinations of the carbide ceramics and the metals contained in the powder material, the solid solubility value of the carbide ceramic in the metal at 1250°C is 8 mass% or less.

In one embodiment, the powder material for additive manufacturing contains cobalt and a carbide ceramic having a solid solubility in cobalt at 1250°C of 8 mass% or less. In one embodiment, the powder material for additive manufacturing contains nickel and a carbide ceramic having a solid solubility in nickel at 1250°C of 8 mass% or less.

As the metal powder made of raw material particles of the metal used for manufacturing the powder material disclosed herein, metal powders used for powder metallurgy and manufacturing of a cemented carbide material can be used without particular limitation. A metal powder having an average particle size (D₅₀) of 1 um or more (for example, 2 um or more) and about 10 um or less (for example, 5 um or less) can be preferably used.

In the powder material of the present embodiment, a content of the metal is 8 to 43 volume% with respect to a total amount of the carbide ceramic and the metal. When the content of the metal is less than 8 volume%, the melted metal cannot be sufficiently wet-spread on the surfaces of the particles of the carbide ceramic at the time of additive manufacturing, and a dense additive-manufactured product cannot be manufactured. As a result, an additive-manufactured product having high hardness cannot be obtained. On the other hand, when the content of the metal exceeds 43 volume%, the content of the carbide ceramic becomes relatively small, and thus an additive-manufactured product having high hardness cannot be obtained. The content of the metal is preferably 10 to 40 volume%, more preferably 15 to 35 volume%, still more preferably 15 to 30 volume%, still more preferably 18 to 29 volume%, and still more preferably 19 to 27 volume% with respect to the total amount of the carbide ceramic and the metal. The content of the metal in the powder material of the present embodiment does not vary from that at the stage of preparation, during the process of sintering granulation, in both mass-based and volume-based values.

In one embodiment, the content of the metal may be 8 to 43 volume%, preferably 10 to 40 volume%, more preferably 15 to 35 volume%, and still more preferably 20 to 30 volume% with respect to the total amount of the powder material.

In one embodiment, the content of the metal is preferably 5 to 45 mass%, more preferably 10 to 45 mass%, still more preferably 15 to 40 mass%, and still more preferably 18 to 39 mass% with respect to the total amount of the carbide ceramic and the metal. In one embodiment, the content of the metal is preferably 5 to 45 mass%, more preferably 10 to 45 mass%, still more preferably 15 to 40 mass%, and still more preferably 18 to 39 mass% with respect to the total amount of the powder material.

### (Optional Components)

The powder material of the present aspect may contain optional components other than the carbide ceramic and the metal. Examples of the optional component include a carbon material (for example, a particulate solid carbon material). Examples of the solid carbon material include graphite, carbon black (acetylene black, Ketjen black, and the like), activated carbon, carbon fiber (PAN-based carbon fiber, pitch-based carbon fiber, graphite fiber, and the like), and nanocarbons (carbon nanotubes, fullerenes, graphene, diamond fine particles, and the like). In addition, a binder, a dispersant, a surfactant, an inorganic pigment, an organic pigment, and the like may be contained as optional components. The binder, dispersant, surfactant, inorganic pigment, and organic pigment are not particularly limited, and known materials can be appropriately selected.

The content (mass basis) of the carbide ceramic in the entire powder material is not particularly limited, but the content of the carbide ceramic is preferably more than 50 mass%, more preferably 55 mass% or more, still more preferably 60 mass% or more, and still more preferably 61 mass% or more, in the entire powder material. In addition, the content of the carbide ceramic is preferably 95 mass% or less, and more preferably 90 mass% or less, still more preferably 85 mass% or less, and still more preferably 82 mass% or less, with respect to the entire powder material.

In a preferred embodiment, a content of one or more compounds selected from the group consisting of a carbide of a Group 4 element and a carbide of a Group 5 element is preferably more than 50 mass%, and more preferably 60 mass% or more with respect to the entire powder material. In a preferred embodiment, the content of the carbides (WC, W₂C, Co₃W₃C, Cr₃W₃, Cr₇C₃, Cr₃C₂, Mo₂C, and the like) containing a Group 6 element is preferably 5 mass% or less, more preferably 3 mass% or less, still more preferably 1 mass% or less, and most preferably 0 mass% with respect to the entire powder material. With this configuration, the generation of the brittle phase can be more effectively suppressed, and an additive-manufactured product having excellent mechanical strength can be more easily obtained.

In addition, the total amount of the carbide ceramic and the metal is preferably 90 mass% or more, more preferably 95 mass% or more, still more preferably 97 mass% or more, still more preferably 98 mass% or more, and still more preferably 99 mass% or more (upper limit: 100 mass%) with respect to the entire powder material. With this configuration, the generation of the brittle phase can be more effectively suppressed, and an additive-manufactured product having excellent mechanical strength can be more easily obtained.

The average particle size (50% volume average particle size, D₅₀) of the powder material (for example, granulated sintered particles described later) according to the present embodiment is not particularly limited, and can have a size suitable for the standard of the additive manufacturing apparatus to be used. For example, the average particle size of the powder material may be a size suitable for supplying the powder material in additive manufacturing. The upper limit of the average particle size of the powder material may be, for example, more than 200 um in a case where the average particle size is larger, but is typically 200 um or less. The upper limit of the average particle size of the powder material is preferably 150 um or less, more preferably 100 um or less, and still more preferably 40 um or less. As the average particle size of the powder material decreases, the filling ratio of the powder material may improve, for example, in the manufacturing area. As a result, the denseness of the three-dimensional additive-manufactured product to be manufactured can be suitably increased. Furthermore, the surface roughness (Ra) of the three-dimensional additive-manufactured product to be manufactured can be reduced, and the effect of improving the dimensional accuracy can be obtained. The lower limit of the average particle size of the powder material is not particularly limited as long as there is no influence on the fluidity of the powder material. However, in consideration of handling at the time of forming the powder material and fluidity of the powder material, the lower limit of the average particle size can be 1 um or more, and is preferably 5 um or more, more preferably 10 um or more. As the average particle size of the powder material increases, the fluidity of the powder material is improved. As a result, the powder material can be favorably supplied to the manufacturing apparatus, and the finishing of the three-dimensional additive-manufactured product to be prepared becomes favorable, which is preferable. A volume-based cumulative 97% particle size (D₉₇) and a volume-based cumulative 3% particle size (D₃) of the powder material (for example, the granulated sintered particles described later) are not particularly limited, but from the viewpoint of finishing of the three-dimensional additive-manufactured product of the powder material according to the present embodiment, a value obtained by dividing the cumulative 97% particle size (D₉₇) by the cumulative 3% particle size (D₃) may be 2 or more and 6 or less, and preferably 3 or more and 5 or less. The average particle size (50% volume average particle size, D₅₀) of the powder material (for example, the granulated sintered particles described later), the cumulative 97% particle size and the cumulative 3% particle size can be determined by the method described in Examples described later.

The strength of the powder material (hereinafter, referred to as "granule strength") in the powder material (for example, granulated sintered particles described later) according to the present embodiment is not particularly limited, but is preferably 1kgf/mm² or more, more preferably 5kgf/mm² or more, and particularly preferably 10kgf/mm² or more (for example, 20kgf/mm² or more). With this configuration, it is possible to suitably suppress the powder material (for example, the granulated sintered particles described later) from collapsing or scattering due to the energy for manufacturing. As a result, since the supply of the powder material to the manufacturing area is stabilized, a high-quality additive-manufactured product without unevenness can be manufactured. On the other hand, from the viewpoint of easily melting the powder material sufficiently, the granule strength is preferably less than 500kgf/mm², more preferably 300kgf/mm² or less, still more preferably 200kgf/mm² or less, and particularly preferably 100kgf/mm² or less (for example, 50kgf/mm² or less). The granule strength of the powder material (for example, the granulated sintered particles described later) can be determined by the method described in Examples described later.

The bulk density of the powder material (for example, granulated sintered particles described later) according to the present embodiment is not particularly limited, and is, for example, 0.5 to 5 g/cm³. Within the above range, the filling ratio of the powder material can be improved in the manufacturing area. As a result, the denseness of the three-dimensional additive-manufactured product to be manufactured can be suitably increased. In addition, handling at the time of forming a powder material and fluidity of the powder material are excellent. The bulk density of the powder material (for example, the granulated sintered particles described later) can be determined by the method described in Examples described later.

The powder material (for example, granulated sintered particles described later) according to the present embodiment is not particularly limited, but preferably has a repose angle of less than 39°. The repose angle can be one of indices that have been widely adopted to indicate a fluidity of a powder in the related art. Then, for example, it can be an index that can practically reflect a spontaneous fluidity when the powder material is conveyed in a supply apparatus and a manufacturing apparatus. Therefore, it is possible to realize a powder material having a high fluidity by defining the repose angle to be small. As a result, a powder material capable of preparing a homogeneous three-dimensional additive-manufactured product with higher productivity can be obtained. The lower limit of the repose angle is not particularly limited, but the repose angle is preferably 20° or more from the viewpoint of making the powder material less likely to scatter or facilitating control of a supply amount of the powder material. The repose angle of the powder material (for example, the granulated sintered particles described later) can be determined by the method described in Examples described later.

### <Preparation of Powder Material>

The powder material disclosed herein can be prepared, for example, by mixing raw material particles made of a carbide ceramic and raw material particles made of a metal together with optional components as necessary. The material formed of such a mixed powder is a typical example of the carbide ceramic/metal-containing powder material disclosed herein.

However, a more suitable powder material is a powder material formed of granulated sintered particles in which the carbide ceramic and the metal are mixed. Typically, the powder material is a powder material formed of granulated sintered particles as secondary particles formed by mixing and granulating raw material particles (primary particles) of the respective components and then sintering the granulated particles, and in the secondary particles, the respective primary particles are three-dimensionally bonded with gaps. With this configuration, the formation of the brittle phase can be more effectively suppressed, and an additive-manufactured product having excellent mechanical strength can be more easily obtained. Being "formed of" as used herein means that the powder material is primarily composed of the granulated sintered particles described above. The term "primarily" indicates that the granulated sintered particles account for preferably 90 mass% or more, more preferably 95 mass% or more, still more preferably 98 mass% or more (upper limit: 100 mass%) of the powder material. Hereinafter, an example of a granulation sintering method for suitably manufacturing such granulated sintered particles will be described, but the method is not limited thereto.

### <Manufacturing of Granulated Sintered Particles>

The granulation sintering method is a method in which raw material particles are granulated into the form of secondary particles and then sintered to bond (sinter) the raw material particles. In such a granulation sintering method, granulation can be performed using, for example, a granulation method such as dry granulation or wet granulation. Examples of the granulation method include a tumbling granulation method, a fluidized bed granulation method, a mixing granulation method, a crushing granulation method, a melt granulation method, a spray granulation method, a microemulsion granulation method, and the like. Among these, a spray granulation method is exemplified as a suitable granulation method.

According to the spray granulation method, for example, a powder material can be manufactured by the following procedure. That is, first, raw material particles of respective kinds corresponding to the carbide ceramic and the metal are prepared, and the surfaces thereof are stabilized with a protective agent or the like as necessary. Then, the raw material particles are dispersed in an appropriate solvent together with, for example, a binder as an optional component and/or spacer particles, made of an organic material, or the like to prepare a spray liquid. The dispersion of the raw material particles in the solvent can be performed using, for example, a mixer such as a homogenizer or a blade type stirrer, a disperser, or the like. Then, droplets are formed from the sprayed liquid using an ultrasonic sprayer or the like, and the droplets are placed on an air flow and passed through a spray drying device (spray dryer), whereby granulated particles can be formed.

The obtained granulated particles are introduced into a predetermined firing furnace and sintered to obtain a powder material including granulated sintered particles in the form of secondary particles in which primary particles are bonded with gaps. Here, the primary particles may have substantially the same size and shape as the raw material particles, or the raw material particles may be grown and bonded by firing.

In the manufacturing process described above, in a state where the droplets are dried, the raw material particles and the binder are in a uniform mixed state, and the raw material particles are bound by the binder to constitute mixed particles. When spacer particles are further used, the raw material particles and the spacer particles are bound by a binder in a uniform mixed state to form mixed particles. Then, by firing the mixed particles, the binder (and spacer particles) disappears (burns out), and the raw material particles are sintered to form secondary particles in a form in which the primary particles are bonded with gaps being present therebetween.

At the time of sintering, a part of the raw material particles may become a liquid phase and contribute to bonding with other particles depending on the composition and size of the raw material particles. Therefore, the average particle size of the primary particles may be larger than that of the raw material particles of the starting material. The average particle size of the secondary particles and the primary particles and the size and ratio of the gaps formed between the primary particles can be designed according to the desired form of the secondary particles. Similarly, the granule strength, the bulk density, and the repose angle of the secondary particles can also be designed according to the desired form of the secondary particles.

In the above-described manufacturing process, a concentration of the raw material particles of the spray liquid to be prepared is preferably 10 to 40 mass%. Examples of the binder to be added include carboxymethyl cellulose (CMC), polyvinylpyrrolidone (PVP), and the like. The binder to be added is preferably adjusted at a ratio of 0.05 to 10 mass% (for example, 1 to 5 mass%) with respect to the mass of the raw material particles. The environment for firing is not particularly limited, but may be in the air, vacuum, or an inert gas atmosphere, and sintering is preferably performed at a temperature of 600°C or more and 1600°C or less. In particular, when spacer particles made of an organic material or the like, a binder or the like is used, sintering may be performed in an atmosphere in which oxygen exists for the purpose of removing the organic material in the granulated particles. If necessary, the manufactured secondary particles may be crushed and classified.

### <XRD Spectrum>

In the powder material according to an aspect of the present invention, in the XRD spectrum of an additive-manufactured product obtained by additive manufacturing including laser light irradiation, peaks other than those derived from the powder material before the laser light irradiation are not included. A specific form of additive manufacturing including laser light irradiation is as described later. Examples of the peaks other than those derived from the powder material before laser light irradiation include peaks, caused by decomposition products of the carbide ceramic accompanying melting and rapid cooling and solidification of the carbide ceramic and the metal, reaction products of the carbide ceramic and the metal, free carbon, generation of brittle phases caused by these, etc., and the like. By suppressing the occurrence of such peaks, an additive-manufactured product that is dense and excellent in mechanical strength can be obtained. As the means for obtaining such a powder material, for example, it is possible to select a combination of the carbide ceramic and the metal in which such a reaction hardly occurs. For example, the combination of the carbide ceramic and the metal may be selected such that the solid solubility of the carbide ceramic in the metal at 1250°C is 8 mass% or less.

### <Additive Manufacturing Method>

The powder material of the present aspect can be used for additive manufacturing, and an additive-manufactured product can be manufactured by additive manufacturing. That is, one aspect of the present invention is a method for manufacturing an additive-manufactured product, containing performing additive manufacturing using the powder material for additive manufacturing of the present aspect. According to the method of the present aspect, an additive-manufactured product having excellent mechanical properties can be manufactured.

As a typical example of such an additive manufacturing method, a laser powder build-up method (also referred to as a laser metal deposition method, LMD method) and powder bed fusion (PBF) method. The powder bed fusion (PBF) methods include a selective laser melting (SLM method), which uses laser light as the irradiation energy, and an electron beam melting method (EBM method), which uses electron beams as the irradiation energy.

The laser powder buildup method is a technique of providing a powder material to a desired part of a structure, irradiating the powder material with laser light to melt and solidify the powder material, and buildup is performed at the part (that is, an additive-manufactured product is manufactured). By using this method, for example, when physical deterioration such as wear occurs in a structure, a material constituting the structure, a reinforcing material, or the like is supplied as a powder material to the deteriorated part, and the powder material is melted and solidified, whereby the deteriorated part or the like can be build-up.

The powder bed fusion method is a technique of shaping a three-dimensional structure by repeating an operation of scanning a powder layer obtained by deposition of a powder material with laser light or an electron beam and melting and solidifying the powder layer into a desired shape for layering for each cross section (one slice data) based on slice data created from a design drawing.

In a preferred embodiment, the additive manufacturing includes melting and solidifying the powder material by laser light irradiation. Thus, an additive-manufactured product having excellent mechanical strength can be more efficiently obtained. In a preferred embodiment, additive manufacturing is performed by a powder bed fusion method using laser light as irradiation energy. In a preferred embodiment, the additive manufacturing is performed by the SLM method.

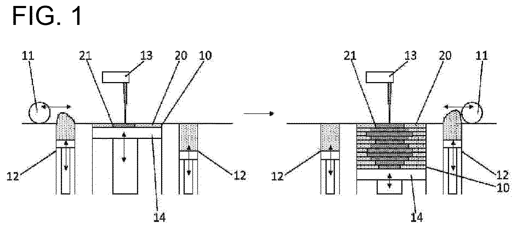

An example of a method for manufacturing an additive-manufactured product by powder additive manufacturing using the powder material disclosed herein will be described with reference to FIG. 1. FIG. 1 is a simplified view of an additive manufacturing apparatus for powder additive manufacturing. As shown in this figure, as a rough configuration, the additive manufacturing apparatus includes a manufacturing area (layering area) 10 which is a space where additive manufacturing is performed, a stock 12 that stores a powder material, a wiper 11 that assists supply of the powder material to the manufacturing area 10, and solidification means (energy irradiation means such as a laser oscillator (for example, carbon dioxide laser, YAG laser, or the like), and an electron beam irradiator) 13 for solidifying the powder material. Note that "solidification" includes directly bonding particles (for example, secondary particles such as granulated sintered particles) constituting a powder material to each other by melting and solidification to fix the shape to a predetermined cross-sectional shape.

The manufacturing area 10 typically has a shaping space with an outer periphery surrounded below a shaping surface, and includes an elevating table 14 that can be raised and lowered in the shaping space. The elevating table 14 can be lowered by a predetermined thickness Δt1, and a target additive-manufactured product is shaped on the elevating table 14. The stock 12 is disposed beside the manufacturing area 10, and includes, for example, a bottom plate (elevating table) that can be raised and lowered by a cylinder or the like in a storage space of which the outer periphery is surrounded. When the bottom plate is raised, a predetermined amount of powder material can be supplied (extruded) to the shaping surface.

In such an additive manufacturing apparatus, by supplying a powder material layer 20 to the manufacturing area 10 in a state where the elevating table 14 is lowered from the shaping surface by the predetermined thickness Δt1, the powder material layer 20 having the predetermined thickness Δt1 can be prepared. At this time, by causing the wiper 11 to scan the shaping surface, the powder material extruded from the stock 12 is supplied onto the manufacturing area 10, and the surface of the powder material is flattened to form the uniform powder material layer 20. Then, for example, by irradiating only a solidification region corresponding to the slice data of the first layer with energy such as laser light or an electron beam via the solidification means 13 with respect to the formed powder material layer 20 of the first layer, the powder material is melted or sintered into a desired cross-sectional shape, and a powder solidified layer 21 as the first layer can be formed.

Next, the elevating table 14 is lowered by a predetermined thickness Δt1, the powder material is supplied again, and the powder material is smoothed by the wiper 11 to form the powder material layer 20 as the second layer. Then, only the solidification region corresponding to the slice data of the powder material layer 20 as the second layer is irradiated with energy via the solidification means 13 to solidify the powder material, thereby forming the powder solidified layer 21 as the second layer. At this time, the powder solidified layer 21 as the second layer and the powder solidified layer 21 as the first layer, which is the lower layer, are integrated to form a layered body up to the second layer. Subsequently, the elevating table 14 is lowered by a predetermined thickness Δt1 to form a new powder material layer 20, and energy is applied via the solidification means 13 to form the powder solidified layer 21 only at a required location. Thus, the additive manufacturing apparatus can manufacture the target three-dimensional additive-manufactured product based on the slice data created from the design drawing (3D CAD data) prepared in advance by repeating this process.

As described above, according to the powder material disclosed herein, the formation of the brittle phase is suppressed in the additive manufacturing process, and it is possible to manufacture a cemented carbide three-dimensional additive-manufactured product having high hardness with less cracks and chips based on high-hardness carbide ceramic-metal.

The three-dimensional additive-manufactured product manufactured by the above process may be used as a cemented carbide three-dimensional additive-manufactured product as it is, but in a preferred embodiment, the three-dimensional additive-manufactured product manufactured by the above process is subjected to heat treatment. The temperature of the heat treatment is not particularly limited, but is, for example, 1200°C or more and 1500°C or less. The heat treatment is not particularly limited, but is preferably performed under reduced pressure. The pressure during the heat treatment is also not particularly limited, and is, for example, 1 Pa or more and 100 Pa or less. The time for the heat treatment is not particularly limited, but is, for example, 0.1 to 50 hours, preferably 1 to 10 hours. The heat treatment may be performed continuously or intermittently, but the total heat treatment time is preferably in the above range. By this heat treatment, the three-dimensional additive-manufactured product is sintered and densified.

The three-dimensional additive-manufactured product after being subjected to the heat treatment may be further subjected to hot isostatic pressing (HIP). Hot isostatic pressing (HIP) is a technique for performing pressure processing on an object at high temperature and high pressure. For example, the three-dimensional additive-manufactured product after being subjected to the heat treatment described above may be air-cooled to a temperature close to room temperature, and then subjected to HIP.

The heating temperature of the HIP is, for example, 1200°C or higher and 1400°C or lower, and preferably 1300°C or higher and 1400°C or lower. The pressurizing pressure of the HIP is preferably a value sufficiently higher than the pressure of the heat treatment described above, and is, for example, 50 MPa or more and 180 MPa or less. The HIP processing time is, for example, 1 hour or more and 5 hours or less. The HIP is not particularly limited, but is performed in a state where the three-dimensional additive-manufactured product is disposed in an inert gas atmosphere such as argon (Ar). By further performing HIP on the three-dimensional additive-manufactured product after being subjected to the heat treatment, the three-dimensional additive-manufactured product can be further densified and the strength can be enhanced.

That is, one aspect of the present invention is an additive-manufactured product obtained by additive manufacturing using the powder material for additive manufacturing of the present aspect. In a preferred embodiment, the additive manufacturing includes laser light irradiation. In a preferred embodiment, the additive manufacturing includes melting and solidifying the powder material by laser light irradiation.

The additive-manufactured product obtained by additive manufacturing using the powder material for additive manufacturing of the present embodiment may be an additive-manufactured product obtained by additive manufacturing including laser light irradiation, or may be a sintered body obtained by further heat-treating the additive-manufactured product. According to one embodiment, the additive-manufactured product is an additive-manufactured product that has not been subjected to heat treatment after additive manufacturing including laser light irradiation.

The present invention includes the following forms and aspects.
1. A powder material for additive manufacturing containing a carbide ceramic and a metal, wherein
   a content of the metal is 8 to 43 volume% with respect to a total amount of the carbide ceramic and the metal, and
   in an XRD spectrum of an additive manufactured product obtained by additive manufacturing including laser light irradiation, peaks other than those derived from the powder material before the laser light irradiation are not included.
2. A powder material for additive manufacturing containing a carbide ceramic and a metal, wherein
   a content of the metal is 8 to 43 volume% with respect to a total amount of the carbide ceramic and the metal, and
   a solid solubility of the carbide ceramic in the metal at 1250°C is 8 mass% or less.
3. The powder material for additive manufacturing according to the above-described 1 or 2, in which a standard enthalpy of formation of the carbide ceramic is - 90 kJ/mol or less.
4. The powder material for additive manufacturing according to any of the above-described 1 to 3, in which a melting point of the carbide ceramic is 2700°C or higher.
5. The powder material for additive manufacturing according to any one of the above-described 1 to 4, in which the carbide ceramic is one or more compounds selected from the group consisting of a carbide of a Group 4 element and a carbide of a Group 5 element.
6. The powder material for additive manufacturing according to any one of the above-described 1 to 5, in which the metal is one or more selected from the group consisting of cobalt, nickel, and iron.
7. The powder material for additive manufacturing according to any one of the above-described 1 to 6, formed of granulated sintered particles in which the carbide ceramic and the metal are mixed.
8. A method for manufacturing an additive-manufactured product, the method including: performing additive manufacturing using the powder material for additive manufacturing according to any one of the above-described 1 to 7.
9. The method for manufacturing an additive-manufactured product according to the above-described 8, in which the additive manufacturing includes melting and solidifying the powder material by laser light irradiation.

### EXAMPLES

Hereinafter, examples relating to the manufacturing of the powder material and the additive-manufactured product disclosed herein will be described, but the present technology is not intended to be limited to those shown in the following examples.

### <Preparation of Powder Material>

### (Example 1)

As raw material powders, a titanium carbide (TiC) powder having an average particle size (D₅₀) of about 1 um and a cobalt (Co) powder having an average particle size (D₅₀) of about 3 um were prepared. Carboxymethyl cellulose (CMC) was prepared as a binder. A TiC powder and a Co powder were mixed such that the Co powder accounted for 39 mass% (26.4 volume%) of the total amount of the TiC powder and the Co powder. Then, 99 parts by mass of a mixture of the TiC powder and the Co powder and 1 part by mass of CMC were blended, and the resulting blended powder was wet-mixed, and then granulated with a spray dryer. The obtained granulated particles were sintered to manufacture a powder material formed of the granulated sintered particles (secondary particles) according to the present Example.

The melting point of TiC is 3250°C, the standard enthalpy of formation of TiC is -185 kJ/mol, and the solid solubility of TiC in Co at 1250°C is 1 mass%.

Here, in each of Examples and Comparative Examples, as the melting point of the carbide ceramic, a value described in Superhard Alloys and Sintered Hard Materials: Fundamentals and Applications, edited by Hisashi Suzuki, Maruzen Publishing Co., Ltd. (February 1986) can be used. As the standard enthalpy of formation of the carbide ceramic, a value described in Kagaku Binran, Kiso Hen, 5th edition, edited by The Chemical Society of Japan, Maruzen Publishing Co., Ltd. (February 2004) can be used. As the solid solubility value of the carbide ceramic in the metal at 1250°C, the value described in F. W. Glaser: Met. Progr., 67 (1955) 77-82 is used.

### (Example 2)

As raw material powders, a vanadium carbide (VC) powder having an average particle size (D₅₀) of about 0.2 um and a cobalt (Co) powder having an average particle size (D₅₀) of about 3 um were prepared. CMC was prepared as a binder. A VC powder and a Co powder were mixed such that the Co powder accounted for 36 mass% (26.4 volume%) of the total amount of the VC powder and the Co powder. Then, 99 parts by mass of a mixture of the VC powder and the Co powder and 1 part by mass of CMC were blended. The powder material according to the present Example was manufactured by the same process as in Example 1 except for the above.

The melting point of VC is 2830°C, the standard enthalpy of formation of VC is -102 kJ/mol, and the solid solubility of VC in Co at 1250°C is 6 mass%.

### (Example 3)

As raw material powders, a zirconium carbide (ZrC) powder having an average particle size (D₅₀) of about 5 um and a cobalt (Co) powder having an average particle size (D₅₀) of about 3 um were prepared. CMC was prepared as a binder. A ZrC powder and a Co powder were mixed such that the Co powder accounted for 32 mass% (26.4 volume%) of the total amount of the ZrC powder and the Co powder. Then, 99 parts by mass of a mixture of ZrC powder and Co powder and 1 part by mass of CMC were blended. The powder material according to the present Example was manufactured by the same process as in Example 1 except for the above.

The melting point of ZrC is 3180°C, and the standard enthalpy of formation of ZrC is -203 kJ/mol.

### (Example 4)

As raw material powders, a niobium carbide (NbC) powder having an average particle size (D₅₀) of about 2 um and a cobalt (Co) powder having an average particle size (D₅₀) of about 3 um were prepared. CMC was prepared as a binder. A NbC powder and a Co powder were mixed such that the Co powder accounted for 29 mass% (26.4 volume%) of the total amount of the NbC powder and the Co powder. Then, 99 parts by mass of a mixture of the NbC powder and the Co powder and 1 part by mass of CMC were blended. The powder material according to the present Example was manufactured by the same process as in Example 1 except for the above.

The melting point of NbC is 3500°C, the standard enthalpy of formation of NbC is -139 kJ/mol, and the solid solubility of NbC in Co at 1250°C is 5 mass%.

### (Example 5)

As raw material powders, a tantalum carbide (TaC) powder having an average particle size (D₅₀) of about 1.5 um and a cobalt (Co) powder having an average particle size (D₅₀) of about 3 um were prepared. CMC was prepared as a binder. A TaC powder and a Co powder were mixed such that the Co powder accounted for 18 mass% (26.4 volume%) of the total amount of the TaC powder and the Co powder. Then, 99 parts by mass of a mixture of the TaC powder and the Co powder and 1 part by mass of CMC were blended. The powder material according to the present Example was manufactured by the same process as in Example 1 except for the above.

The melting point of TaC is 3880°C, the standard enthalpy of formation of TaC is -146 kJ/mol, and the solid solubility of TaC in Co at 1250°C is 3 mass%.

### (Example 6)

As raw material powders, a titanium carbide (TiC) powder having an average particle size (D₅₀) of about 1 um and a nickel (Ni) powder having an average particle size (D₅₀) of about 3 um were prepared. CMC was prepared as a binder. A TiC powder and a Ni powder were mixed such that the Ni powder accounted for 30 mass% (19.2 volume%) of the total amount of the TiC powder and the Ni powder. Then, 99 parts by mass of a mixture of the TiC powder and the Ni powder and 1 part by mass of CMC were blended, and the resulting blended powder was wet-mixed, and then granulated with a spray dryer. The obtained granulated particles were sintered to manufacture a powder material formed of the granulated sintered particles (secondary particles) according to the present Example.

The solid solubility of TiC in Ni at 1250°C is 5 mass%.

### (Comparative Example 1)

As raw material powders, a chromium carbide (Cr₃C₂) powder having an average particle size (D₅₀) of about 2 um and a cobalt (Co) powder having an average particle size (D₅₀) of about 3 um were prepared. CMC was prepared as a binder. A Cr₃C₂ powder and a Co powder were mixed such that the Co powder accounted for 32 mass% (26.4 volume%) of the total amount of the Cr₃C₂ powder and the Co powder. Then, 99 parts by mass of a mixture of the Cr₃C₂ powder and the Co powder and 1 part by mass of CMC were blended. The powder material according to the present Comparative Example was manufactured by the same process as in Example 1 except for the above.

The melting point of Cr₃C₂ is 1895°C, the standard enthalpy of formation of Cr₃C₂ is -81 kJ/mol, and the solid solubility of Cr₃C₂ in Co at 1250°C is 12 mass%.

### (Comparative Example 2)

As raw material powders, a molybdenum carbide (Mo₂C) powder having an average particle size (D₅₀) of about 2 um and a cobalt (Co) powder having an average particle size (D₅₀) of about 3 um were prepared. CMC was prepared as a binder. A Mo₂C powder and a Co powder were mixed such that the Co powder accounted for 26 mass% (26.4 volume%) of the total amount of the Mo₂C powder and the Co powder. Then, 99 parts by mass of a mixture of the Mo₂C powder and the Co powder and 1 part by mass of CMC were blended. The powder material according to the present Comparative Example was manufactured by the same process as in Example 1 except for the above.

The melting point of Mo₂C is 2690°C, the standard enthalpy of formation of Mo₂C is -25 kJ/mol, and the solid solubility of Mo₂C in Co at 1250°C is 13 mass%.

### (Comparative Example 3)

As raw material powders, a tungsten carbide (WC) powder having an average particle size (D₅₀) of about 2 um and a cobalt (Co) powder having an average particle size (D₅₀) of about 3 um were prepared. CMC was prepared as a binder. A WC powder and a Co powder were mixed such that the Co powder accounted for 17 mass% (26.4 volume%) of the e total amount of the WC powder and the Co powder. Then, 99 parts by mass of a mixture of the WC powder and the Co powder and 1 part by mass of CMC were blended. The powder material according to the present Comparative Example was manufactured by the same process as in Example 1 except for the above.

The melting point of WC is 2600°C, the standard enthalpy of formation of WC is -41 kJ/mol, and the solid solubility of WC in Co at 1250°C is 22 mass%.

In each of Examples and Comparative Examples, as the average particle size (average particle size of primary particles) of the raw material powder, the particle size at 50% of the integrated value in the volume-based particle size distribution measured by a particle size distribution measuring device based on the laser diffraction/scattering method (50% volume average particle size, D₅₀) was adopted. Incidentally, for the powder in which the average particle size of the primary particles was less than 1 µm, a value calculated as the diameter of spherical particles (sphere equivalent diameter) calculated from the specific surface area was adopted. The average particle size (Dave) of the primary particles can be determined based on the formula: Dave = 6/(ρSm), where Sm is the specific surface area of the raw material powder and ρ is the density of the raw material powder. The specific surface area can be, for example, a value calculated by the BET method from the gas adsorption amount of N₂ or the like measured by the continuous flow method using a specific surface area measuring device (FlowSorbII 2300 manufactured by Micromeritics Instrument Corporation). The specific surface area can be measured according to "Method for measuring specific surface area of powder (solid) by gas adsorption" defined in JIS Z8830:2013 (ISO9277:2010).

For the powder materials (granulated sintered particles) prepared in each of Examples and Comparative Examples, a volume-based particle size distribution was measured by a commercially available particle size distribution measuring device based on a laser diffraction/scattering method. In the columns of D₃, D₅₀, and D₉₇ in the corresponding columns in Table 1, values of a cumulative 3% particle size, a cumulative 50% particle size (average particle size), and a cumulative 97% particle size from the small particle size side based on the obtained particle size distribution are shown, respectively. The average particle size (D₅₀) of the powder materials prepared in each of Examples and Comparative Examples was in the range of 25 to 30 um, and it was found that most of the particles were present in the range of 10 to 60 µm.

In addition, the granule strength of the powder material (granulated sintered particles) prepared in each of Examples and Comparative Examples was measured using an electromagnetic force loading type compression testing machine. Specifically, 10 or more granulated sintered particles constituting the powder material of each of Examples and Comparative Examples were randomly sampled, and the arithmetic average value of the fracture strength measured using a commercially available micro compression testing device (MCT-500: manufactured by Shimadzu Corporation) was taken as the granule strength (kgf/mm²). For the granulated sintered particles, when the critical load obtained in the compression test is L [N] and the average particle size is d [mm], the fracture strength σ [MPa] of the granulated sintered particles can be calculated from the formula: σ=2.8 × L/π/d². The granule strengths (kgf/mm²) of the powder materials of each of Examples and Comparative Examples are shown in corresponding columns of Table 1.

The bulk density of the powder material (granulated sintered particles) prepared in each of Examples and Comparative Examples was measured. As the bulk density, a value measured in accordance with a metal powder-apparent density measurement method defined in JIS Z2504:2012 was adopted. Specifically, the bulk density was calculated by measuring the mass of the powder when a container having a predetermined volume was filled in a naturally filled state with the powder naturally flowing out from an orifice having a diameter of 2.5 mm. For the measurement of the bulk density, a value measured using a JIS cassette densitometer for metal powders (manufactured by Tsutsui Scientific Instruments Co., Ltd.) was adopted. The results are shown in Table 1 below.

The repose angle of the powder material (granulated sintered particles) prepared in each of Examples and Comparative Examples was measured. In the present specification, the repose angle means a bottom angle calculated from a diameter and a height of a conical deposit generated by dropping a powder material from a funnel having a certain height onto a horizontal substrate. The repose angle was measured according to the provision of JIS R 9301-2-2:1999 "Alumina powder physical property measurement method-2: repose angle". The results are shown in Table 1 below.

### <Preparation of Additive-Manufactured Product>

A simple cube-shaped additive-manufactured product was prepared using a commercially available additive manufacturing apparatus (product name: ProX DMP200, manufactured by 3D Systems Corporation) using the powder material (granulated sintered particles) prepared in each of Examples and Comparative Examples. That is, the powder material laid flat was irradiated with laser light and melted layer by layer, and this process was repeated to prepare a cube-shaped additive-manufactured product (30 mm long × 10 mm wide × 10 mm thick). The laser light had an output of 300 W, a scanning speed of 300 mm/s, a pitch width of 0.1 mm, a layering thickness per layer of 30 um, and the number of layers was 334.

After the additive manufacturing, the obtained additive-manufactured product was subjected to heat treatment. That is, the firing treatment was performed in a reduced-pressure atmosphere (10 Pa) at 1320°C for 4 hours (continuous).

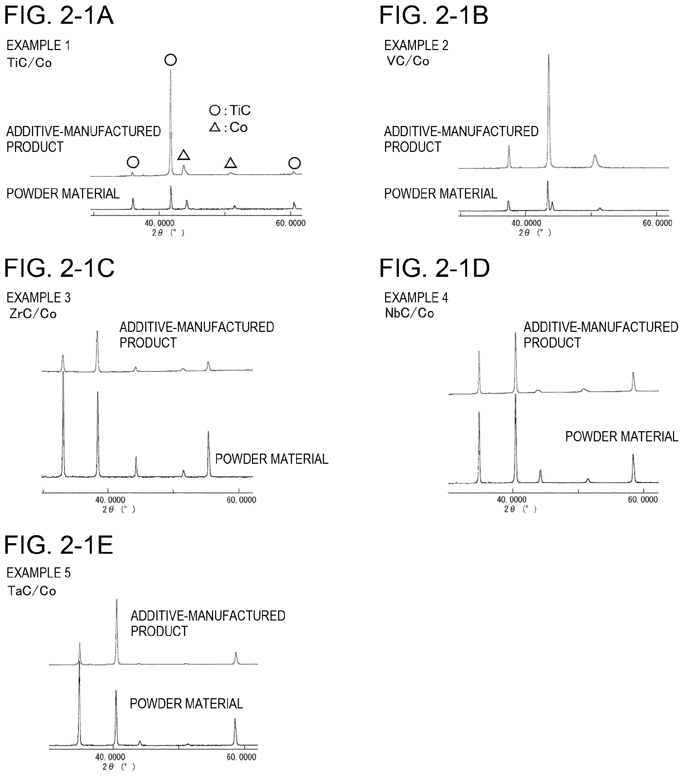

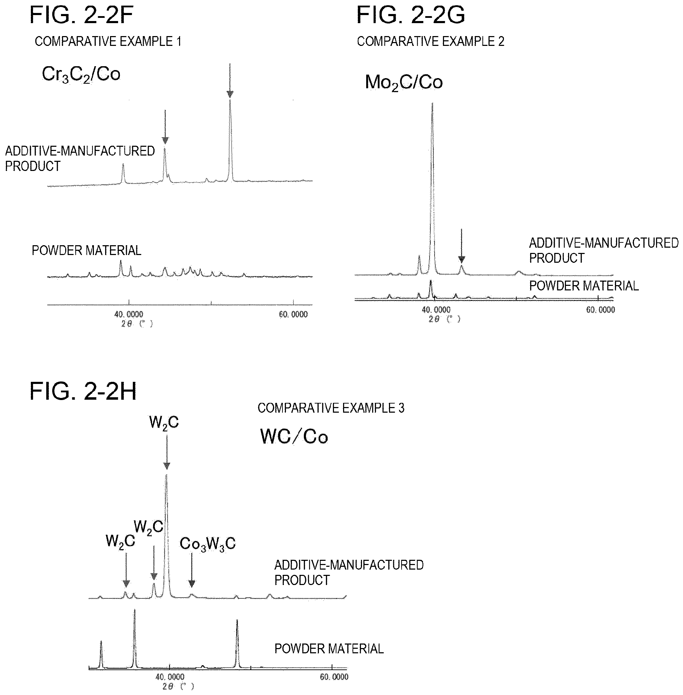

The powder materials obtained in each of Examples and Comparative Examples were subjected to X-ray diffraction (XRD) measurement using CuKα rays before and after being irradiated with laser light. That is, XRD measurement was performed on a powder material (granulated sintered particles) before being irradiated with laser light and an additive-manufactured product after being irradiated with laser light (specifically, after additive manufacturing including laser light irradiation) and before being subjected to heat treatment. For the XRD measurement, an X-ray diffraction analyzer (Ultima IV manufactured by RIGAKU Corporation) was used, CuKα rays (voltage 20 kV, current 10 mA) were used as an X-ray source, and the measurement was performed with a scanning range of 2θ = 10° to 70°, a scan speed of 10°/min, a sampling width of 0.01°, a divergence slit of 1°, a divergence vertical restriction slit of 10 mm, a scattering slit of 1/6°, a light-receiving slit of 0.15 mm, and an offset angle of 0°. FIGS. 2-1A to 2-1E and FIGS. 2-2F to 2-2H show XRD spectra of the powder materials obtained in Examples 1 to 5 and Comparative Examples 1 to 3 before and after being irradiated with laser light. In FIGS. 2-1A to 2-2H, "powder material" represents an XRD spectrum of a powder material prepared in each of Examples and Comparative Examples, and "additive-manufactured product" represents an XRD spectrum of an additive-manufactured product prepared by additive manufacturing including laser light irradiation using the powder material. Here, in the peaks of the XRD spectrum after laser light irradiation, when the corresponding peaks were observed in the spectrum before laser light irradiation, the peaks were determined to be peaks derived from the powder material. In the peaks of the XRD spectrum after laser light irradiation, when corresponding peaks were not observed in the spectrum before laser light irradiation, the peaks were determined to be peaks other than peaks derived from the powder material. At this time, when the strength of the peaks other than the peaks derived from the powder material was less than 1% of the strength of the peak having the highest intensity in the XRD spectrum after laser light irradiation, the peaks other than the peaks derived from the powder material were evaluated as "absent", and when the strength was 1% or more, the peaks were evaluated as "present".

In the additive-manufactured product prepared in each Example, the XRD spectrum of the sintered body after being subjected to the heat treatment was measured in the same manner, and no peaks other than the peaks derived from the powder material were observed in any sintered body.

The additive-manufactured product obtained in Example 1 and the sintered body obtained by heat-treating the additive-manufactured product were each cut in a direction orthogonal to the layering direction, and the cross section was observed at a magnification of 1000 using a scanning electron microscope (SEM, S-3000N manufactured by Hitachi High-Technologies Corporation). The observation of the cross section of the additive-manufactured product in the present specification was performed by embedding a sample for evaluation of the additive-manufactured product in a resin and exposing the cross-section according to a standard method.

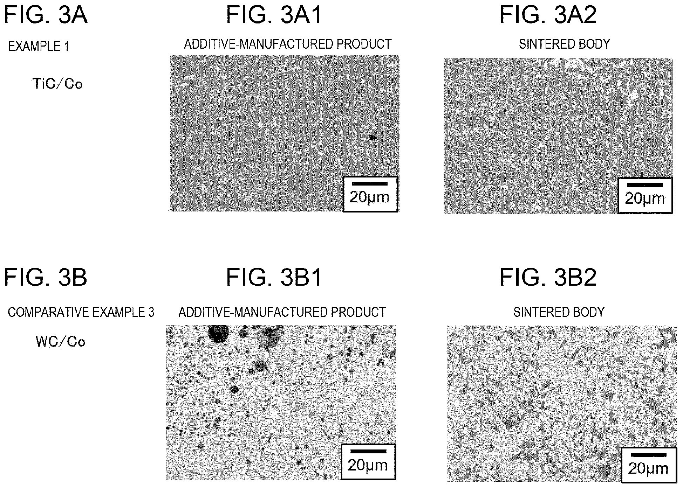

The results are shown in FIG. 3A. In FIG. 3A, FIGS. 3A1, and 3A2 are SEM photographs of cross sections of an additive-manufactured product obtained in Example 1 and a sintered body obtained by heat-treating the additive-manufactured product, respectively. In the SEM photographs of the additive-manufactured product (FIG. 3A1) and the sintered body (FIG. 3A2), a black region is a region where TiC exists, and a white region is a region where Co exists.

The cross sections of the additive-manufactured product obtained in Comparative Example 3 and the sintered body obtained by subjecting the additive-manufactured product to heat treatment were observed in the same manner. The results are shown in FIG. 3B. In FIG. 3B, FIGS. 3B1, and 3B2 are SEM photographs of cross sections of an additive-manufactured product obtained in Comparative Example 3 and a sintered body obtained by heat-treating the additive-manufactured product, respectively. In the SEM photographs of the additive-manufactured product (FIG. 3B1) and the sintered body (FIG. 3B2), a black region is a region where Co exists, and a white region is a region where WC exists.

A cross section of the sintered body after heat treatment of the additive-manufactured product prepared in each of Examples and Comparative Examples was mirror-polished, and the Vickers hardness in such a cross section was measured in accordance with JIS Z2244:2009. In the measurement of the Vickers hardness, the Vickers hardness was calculated from an indentation obtained when a diamond indenter having a facing angle of 136° was pressed under a test force of 0.2 kgf (1.96 N) and a retention time of 10 seconds using a hard microhardness testing device (HMV-1 manufactured by Shimadzu Corporation). The Vickers hardness was measured at six points, and the arithmetic average value thereof was taken as the hardness (Vickers hardness (HV)) of the additive-manufactured product (sintered body) after the heat treatment. The obtained results are shown in Table 1 below.

### [Table 1]

**Table 1**

| | | Example 1 | Example 2 | Example 3 | Example 4 | Example 5 | Example 6 | Comparative Example 1 | Comparative Example 2 | Comparative Example 3 |
|---|---|---|---|---|---|---|---|---|---|---|
| Carbide ceramic | Type | TiC | VC | ZrC | NbC | TaC | TiC | Cr₃C₂ | Mo₂C | WC |
| | Melting point (°C) | 3250 | 2830 | 3180 | 3500 | 3880 | 3250 | 1895 | 2690 | 2600 |
| | Standard enthalpy of formation (kJ/mol) | -185 | -102 | -203 | -139 | -146 | -185 | -81 | -25 | -41 |
| Metal | Type | Co | Co | Co | Co | Co | Ni | Co | Co | Co |
| Solid solubility of carbide in metal (mass%) | | 1 | 6 | - | 5 | 3 | 5 | 12 | 13 | 22 |
| Powder material (granulated sintered particles) | Metal content (volume%) | 26.4 | 26.4 | 26.4 | 26.4 | 26.4 | 19.2 | 26.4 | 26.4 | 26.4 |
| | Metal content (mass%) | 39 | 36 | 32 | 29 | 18 | 30 | 32 | 26 | 17 |
| | D₃ (µm) | 13 | 12 | 14 | 14 | 15 | 14 | 12 | 15 | 15 |
| | D₅₀ (µm) | 25 | 26 | 27 | 28 | 28 | 30 | 25 | 26 | 30 |
| | D₉₇ (µm) | 48 | 59 | 52 | 54 | 54 | 49 | 50 | 52 | 59 |
| | Granule strength (kgf/mm²) | 29 | 33 | 25 | 24 | 28 | 25 | 26 | 29 | 35 |
| | Bulk density (g/cm³) | 2.0 | 2.2 | 2.5 | 2.7 | 3.8 | 1.5 | 2.4 | 3.0 | 4.0 |
| | Repose angle (°) | 36 | 38 | 38 | 37 | 38 | 37 | 38 | 38 | 36 |
| Additive-manufactured product | New XRD peak after manufacturing | Absent | Absent | Absent | Absent | Absent | Absent | Present | Present | Present |
| | Hardness of Additive-manufactured product after heat treatment (HV) | 1400 | 1100 | 1000 | 900 | 900 | 1500 | 600 | 600 | 800 |

As shown in FIGS. 2-1A to 2-1E and Table 1, none of the additive-manufactured products prepared in Examples 1 to 5 showed peaks other than peaks derived from the powder material before laser light irradiation in the XRD spectrum. For example, as shown in FIG. 2-1A, in the XRD spectrum of the additive-manufactured product prepared using the powder material of Example 1, peaks derived from TiC indicated by O and peaks derived from Co indicated by △ are observed, and these peaks correspond to peaks derived from TiC and peaks derived from Co in the XRD spectrum of the powder material, respectively. In the XRD spectrum of the additive-manufactured product, no peaks other than the peaks present in the XRD spectrum of the powder material were observed. From this, it can be seen that generation of a brittle phase by laser light irradiation is suppressed in the additive-manufactured product prepared in Example 1. In Examples 2 to 5 shown in FIGS. 2-1B to 2-1E, in the XRD spectrum of the additive-manufactured product, no peaks other than the peaks present in the XRD spectrum of the powder material were observed. Therefore, the XRD spectrum of the additive-manufactured product shows no peaks other than the peaks derived from the powder material before laser light irradiation. Similarly, the additive-manufactured product prepared in Example 6 did not show any peaks other than the peaks derived from the powder material before laser light irradiation in the XRD spectrum (not shown). Further, in the powder materials of Examples 1, 2, and 4 to 6, the solid solubility of carbide ceramic in the metal at 1250°C was 8 mass% or less. In the additive-manufactured product using such a powder material, for example, as shown in FIG. 3A1, a homogeneous and dense additive-manufactured product in which cracks and chips were not recognized even when heat treatment was not performed was obtained. Furthermore, no noticeable particle growth was observed even when the heat treatment was performed as in FIG. 3A2. As shown in Table 1, it was found that the additive-manufactured product (sintered body) after the heat treatment exhibited excellent hardness.

On the other hand, the additive-manufactured products prepared in Comparative Examples 1 to 3 show peaks other than the peaks derived from the powder material before the laser light irradiation in the XRD spectrum as shown by the arrows in FIGS. 2-2F to 2-2H. This is considered to indicate that a brittle phase is formed in the alloy structure of the carbide ceramic and the metal. Specifically, in the XRD spectrum of the additive-manufactured product prepared using the powder material of Comparative Example 3 in FIG. 2-2H, peaks derived from Co₃W₃C, which is a reaction product of WC and Co, and peaks derived from W₂C, which is a product in which carbon in WC is reduced, are observed. These peaks are not observed the XRD spectrum of the powder material, and can be said to be peaks other than peaks derived from the powder material. In the additive-manufactured product prepared in Comparative Example 3, it is considered that a brittle phase such as an η phase is generated by the above-described reaction product and product. In the XRD spectrum of the additive-manufactured product prepared using the powder material of Comparative Example 1 of FIG. 2-2F, peaks considered to be derived from a product in which carbon in Cr₃C₂ is reduced is observed at a position indicated by the arrows. In the XRD spectrum of the additive-manufactured product prepared using the powder material of Comparative Example 2 in FIG. 2-2G, a peak considered to be derived from a reaction product of Mo₂C and Co is observed at a position indicated by an arrow. These peaks are considered to indicate that a brittle phase is generated in the alloy structure.

In the powder material of Comparative Examples 1 to 3, the solid solubility of the carbide ceramic in the metal at 1250°C was more than 8 mass%. In the additive-manufactured product using such a powder material, for example, a dense additive-manufactured product was not obtained as in FIG. 3B1. In addition, it was found that even when the heat treatment was performed, it was not possible to sufficiently densify the additive-manufactured product as shown in FIG. 3B2. In such an additive-manufactured product, the hardness was insufficient in the additive-manufactured product (sintered body) after the heat treatment.

The present application is based on Japanese Patent Application No. 2023-170499 filed on September 29, 2023, the disclosure of which is incorporated herein by reference in its entirety.

### REFERENCE SIGNS LIST

- 10: Manufacturing area
- 11: Wiper
- 12: Stock
- 13: Solidification means
- 14: Elevating table
- 20: Powder material layer
- 21: Powder solidified layer

## Claims

1. A powder material for additive manufacturing comprising a carbide ceramic and a metal, wherein
a content of the metal is 8 to 43 volume% with respect to a total amount of the carbide ceramic and the metal; and
in an XRD spectrum of an additive-manufactured product obtained by additive manufacturing including laser light irradiation, peaks other than those derived from the powder material before the laser light irradiation are not included; or
a solid solubility of the carbide ceramic in the metal at 1250°C is 8 mass% or less.

2. The powder material for additive manufacturing according to claim 1, wherein a standard enthalpy of formation of the carbide ceramic is -90 kJ/mol or less.

3. The powder material for additive manufacturing according to claim 1 or 2, wherein a melting point of the carbide ceramic is 2700°C or higher.

4. The powder material for additive manufacturing according to any one of claims 1 to 3, wherein the carbide ceramic is one or more compounds selected from the group consisting of a carbide of a Group 4 element and a carbide of a Group 5 element.

5. The powder material for additive manufacturing according to any one of claims 1 to 4, wherein the metal is one or more selected from the group consisting of cobalt, nickel, and iron.

6. The powder material for additive manufacturing according to any one of claims 1 to 5, formed of granulated sintered particles in which the carbide ceramic and the metal are mixed.

7. A method for manufacturing an additive-manufactured product, the method comprising: performing additive manufacturing using the powder material for additive manufacturing according to any one of claims 1 to 6.

8. The method for manufacturing an additive-manufactured product according to claim 7, wherein the additive manufacturing includes melting and solidifying the powder material by laser light irradiation.
